# EUROPÄISCHE PATENTSCHRIFT

(11) **EP 0 406 520 B1**
(45) Veröffentlichungstag und Bekanntmachung des Hinweises auf die Patenterteilung: **13.04.1994**
(21) Anmeldenummer: 90103435.5
(22) Anmeldetag: 22.02.1990
(51) Int. Cl.: F16J 15/40

(54) **Ferrofluiddichtung für eine Welle**
Ferrofluidic seal for a shaft
Joint ferrofluidique pour un arbre

(30) Priorität: 07.07.1989 DE 3922356
(43) Veröffentlichungstag der Anmeldung: 09.01.1991
(73) Patentinhaber: Firma Carl Freudenberg, 69469 Weinheim (DE)
(72) Erfinder: Ehmsen, Roland, D-6940 Weinheim (DE); Freudenberg, Ulrich, Dr., D-6945 Grosssachsen (DE); Heck, Fritz, D-6940 Weinheim (DE); Vogt, Rolf, D-6836 Oftersheim (DE)

(56) Entgegenhaltungen:
- DE-A- 1 805 719
- US-A- 3 740 060
- US-A- 4 598 014
- US-A- 4 671 679
- PATENT ABSTRACTS OF JAPAN, Band 8, Nr. 116 (M-229)(1553), 30. Mai 1984; & JP-A-5923167 (NIPPON DENKI K.K.) 06.02.1984

## Beschreibung

Die Erfindung betrifft eine Ferrofluiddichtung für eine Welle, umfassend mehrere in axialer Richtung konzentrisch hintereinander angeordnete Dichtspalte, die jeweils durch eine separate Bohrung für die radiale Zuführung ferrofluidischer Flüssigkeit mit einem zentralen Vorratsraum verbunden und von diesem aus gemeinsam mit der ferrofluidischen Flüssigkeit befüllbar sind.

Eine solche Ferrofluiddichtung ist aus der US-PS 4,671,679, Fig. 6, bekannt. Die Dichtsspalte umschließen die abzudichtende Welle umfangsseitig, wobei es vorgesehen ist, die ferrofluidische Flüssigkeit jedem der Dichtspalte mittels einer separaten Bohrung aus einem gemeinsamen Vorratsraum zuzuführen. Die ferrofluidische Flüssigkeit aus den Dichtspalten ist über die jeweilige Bohrung mit dem gemeinsamen Vorratsraum flüssigkeitsleitend verbunden. Die Druckhaltefähigkeit entsprechender Dichtungen ist dadurch wenig befriedigend.

Aus der US-PS 4,526,382 ist eine Ferrofluiddichtung für eine Welle bekannt, bei der mehrere, in axialer Richtung aufeinanderfolgende Dichtspalte die Welle konzentrisch umschließen. Die einzelnen Dichtspalte sind durch Freiräume voneinander getrennt, wodurch die in den einzelnen Dichtspalten enthaltenen Mengen an ferrofluidischer Flüssigkeit unabhängig voneinander und im Sinne einer Kaskadenanordnung wirksam sind. Die Ferrofluiddichtung weist hierdurch eine verbesserte Druckhaltefähigkeit auf. Die Zuführung der ferrofluidischen Flüssigkeit zu den einzelnen Dichtspalten in der erforderlichen Dosiergenauigkeit ist jedoch äußerst schwierig und nur unter Verwendung komplizierter Hilfseinrichtungen möglich. Bei einem während der bestimmungsgemäßen Verwendung eintretenden Verlust an ferrofluidischer Flüssigkeit muß daher regelmäßig die gesamte Ferrofluiddichtung ausgebaut und durch eine neue Dichtung ersetzt werden.

Der Erfindung liegt die Aufgabe zugrunde, eine Ferrofluiddichtung mit guter Druckhaltefähigkeit zu zeigen, bei der das Einbringen der ferrofluidischen Flüssigkeit in die Dichtspalte und beim Verwender erfolgen kann.

Diese Aufgabe wird erfindungsgemäß bei einer Ferrofluiddichtung der eingangs genannten Art mit den kennzeichnenden Merkmalen von Anspruch 1 gelöst. Auf eine vorteilhafte Ausgestaltung nimmt Anspruch 2 Bezug.

Bei der erfindungsgemäßen Ferrofluiddichtung sind die Bohrungen durch ein zentrales Schließglied gegenüber dem Vorratsraum gemeinsam verschließbar. Hierdurch werden die Bohrungen gegeneinander hydraulisch isoliert und läßt sich eine Abdichtung höherer Drücke in dem abzudichtenden Raum erreichen. Eine sachgerechte Befüllung der Dichtspalte ist sehr einfach. Es ist lediglich erforderlich, in die einzelnen Bohrungen eine Menge an ferrofluidischer Flüssigkeit einzubringen, die wenigstens so groß ist, wie die benötigte Menge. Die Relativverlagerung in Richtung der Dichtspalte erfolgt selbsttätig und unter Ausnutzung der dort wirksamen Magnetkräfte. Dabei ergibt sich nicht nur der Vorteil einer sehr präzisen Dosierung, sondern zusätzlich der weitere Vorteil, daß sich bei einem eventuellen Verlust an ferrofluidischer Flüssigkeit eine selbsttätige Nachbefüllung des Dichtspaltes ergibt.

Das Auffüllen der einzelnen Dichtspalte mit ferrofluidischer Flüssigkeit erfolgt besonders schnell und zuverlässig, wenn die Bohrungen, in axialer Richtung betrachtet, im wesentlichen mittig in die einzelnen Dichtspalte einmünden. Der tatsächliche Durchmesser der Bohrung ist demgegenüber vom Grundsätzlichen her von geringerer Bedeutung. Im Hinblick auf die Vermeidung von Störungen bei sehr hohen Drehzahlen der abzudichtenden Welle hat es sich jedoch als vorteilhaft erwiesen, wenn der Dichtspalt eine Länge hat, die etwa dreibis dreißigmal so groß ist wie der Durchmesser der jeweiligen Bohrung, zweckmäßig acht- bis sechzehnmal so groß.

Die Bohrungen können auch als kapillaraktive Öffnungen gestaltet sein, was weitestgehend ausschließt, daß sich bei extrem hohen Drehzahlen eine hydraulische Übertragung von im Bereich der Dichtspalte wirksamen Kräften in Richtung der Bohrungen ergibt. Um zu erreichen, daß die Dichtspalte in allen Teilbereichen gleichmäßig mit ferrofluidischer Flüssigkeit aufgefüllt werden, hat es sich als vorteilhaft bewährt, wenn die Bohrungen im wesentlichen senkrecht in die Dichtspalte einmünden.

In Anwendungsbereichen, in denen häufiger mit einem Verlust an ferrofluidischer Flüssigkeit gerechnet werden muß, hat es sich als vorteilhaft bewährt, daß jeder einzelnen Bohrung ein separater Vorratsraum zugeordnet ist und die einzelnen Vorratsräume in Umfangsrichtung der Ferrofluiddichtung verteilt sind. Je nach räumlicher Ausdehnung der einzelnen Vorratsräume lassen sich hierdurch erhebliche Reserven an ferrofluidischer Flüssigkeit für jeden einzelnen Dichtspalt verfügbar machen und die Verluste in besonders präziser Weise kontrollieren.

Der Gegenstand der Erfindung wird nachfolgend anhand der als Anlage beigefügten Zeichnung weiter verdeutlicht. Es zeigen:
- Figur 1: eine Ferrofluiddichtung in längsgeschnittener Darstellung;
- Figur 2: einen vergrößert wiedergegebenen Ausschnitt aus der in Figur 1 gezeigten Ferrofluiddichtung.

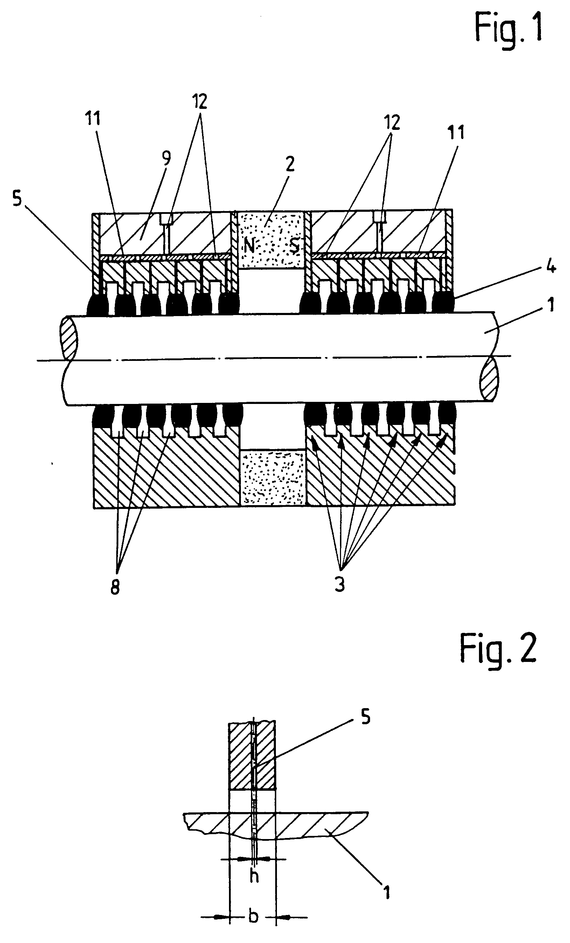

Die in Figur 1 gezeigte Ferrofluiddichtung ist für die Abdichtung einer relativ verdrehbaren und magnetisierbaren Welle 1 bestimmt. Die beiden Pole des in axialer Richtung magnetisierten Ringmagneten 2 sind durch unmittelbar aufgesetzte, kreisringförmig gestaltete Polstücke radial in Richtung der Welle verlängert und in diesem Bereich mit einen axialen Abstand voneinander aufweisenden, die Welle konzentrisch umschließenden Nuten versehen. Zwischen den in Längsrichtung der Welle 1 aufeinanderfolgenden Dichtspalten werden hierdurch Freiräume 8 geschaffen, was eine voneinander unabhängige Wirksamkeit der einzelnen Dichtspalte bedingt.

Diese sind durch senkrecht einmündende Bohrungen 5 mit einem gemeinsamen Vorratsraum verbunden, der eine ferrofluidische Flüssigkeit enthält. Diese wird unter der Wirkung des im Bereich des Dichtspaltes wirksamen Magnetfeldes selbständig durch die Bohrungen 5 in Richtung der Dichtspalte 3 verlagert. Sie verteilt sich in den Dichtspalten 3 etwa in der dargestellten Weise und in Umfangsrichtung gleichmäßig und bewirkt eine Abdichtung derselben. Die in den Dichtspalten 3 enthaltene, ferrofluidische Flüssigkeit ist mit 4 bezeichnet.

Im Anschluß an die Befüllung der Dichtspalte werden die dem Vorratsraum zugewandten Mündungen der Bohrungen 5 durch ein Verschlußglied 11 verschlossen und gegeneinander hydraulisch isoliert. Hierdurch läßt sich eine Abdichtung höherer Drücke in dem abzudichtenden Raum erreichen.

Das Verschlußglied 11 und die Stellschraube 9 sind von Kapillaröffnungen 12 durchdrungen. Diese sind einander und den Mündungen der Bohrungen relativ versetzt zugeordnet und stellen sicher, daß sich beim Verschließen der Bohrungen 5 ein Überdruck in denselben nicht ergeben kann.

In Figur 2 ist ein einzelner Dichtspalt der in Figur 1 dargestellten Ferrofluiddichtung in vergrößertem Maßstab längsgeschnitten wiedergegeben. Die Länge ist mit b bezeichnet, der Durchmesser der Bohrung mit h.

## Patentansprüche

1. Ferrofluiddichtung für eine Welle (1), umfassend mehrere in axialer Richtung konzentrisch hintereinander angeordnete Dichtspalte (3), die jeweils durch eine separate Bohrung (5) für die radiale Zuführung ferrofluidischer Flüssigkeit (4) mit einem zentralen Vorratsraum verbunden und von diesem aus gemeinsam mit der ferrofluidischen Flüssigkeit (4) befüllbar sind, dadurch gekennzeichnet, daß die Bohrungen (5) durch ein zentrales Schließglied (11) gegenüber dem Vorratsraum gemeinsam verschließbar sind, wodurch die Bohrungen (5) gegeneinander hydraulisch isoliert werden können.

2. Ferrofluiddichtung nach Anspruch 1, dadurch gekennzeichnet, daß die Bohrungen in axialer Richtung betrachtet, mittig in die Dichtspalte (3) einmünden.

## Claims

1. A ferrofluidic seal for a shaft (1) comprising a plurality of sealing gaps (3) which are arranged concentrically one after another in the axial direction, are each connected to a central supply chamber through a separate bore (5) for the radial feeding of ferrofluidic liquid (4), and can be filled simultaneously with the ferrofluidic liquid (4) from said supply chamber, characterised in that the bores (5) can be closed simultaneously in relation to the supply chamber by a central closing member (11), as a result of which the bores (5) can be hydraulically isolated from one another.

2. A ferrofluidic seal according to claim 1, characterised in that the bores, seen in the axial direction, open out centrally into the sealing gaps (3).

## Revendications

1. Garniture d'étanchéité ferro-fluide pour un arbre (1), comprenant plusieurs entrefers d'étanchéité (3 ) disposés les uns derrière les autres de manière concentrique dans le sens axial, communiquant chacun avec un espace de réserve ou une réserve grâce à une forure séparée (5), pour l'amenée radiale d'un liquide ferro-fluide (4), et pouvant être remplis, collectivement à partir de celui-ci ou de celle-ci, du liquide ferro-fluide (4), caractérisée par le fait que les forures (5) peuvent être fermées collectivement vis-à-vis de la réserve, grâce à un élément de fermeture (11) central, ce qui fait que les forures peuvent être isolées hydrauliquement les unes des autres.

2. Garniture d'étanchéité ferro-fluide selon la revendication 1, caractérisée par le fait que les forures, considérées dans le sens axial, débouchent de manière centrale dans les entrefers d'étanchéité (3).
